# EUROPEAN PATENT SPECIFICATION

(11) **EP 1 740 856 B1**
(45) Date of publication and mention of the grant of the patent: **25.06.2008**
(21) Application number: 05735614.9
(22) Date of filing: 15.04.2005
(51) Int. Cl.: F16J 15/08, F16J 15/12

(54) **METALLIC FLAT GASKET**
METALLFLACHDICHTUNG
JOINT PLAT METALLIQUE

(30) Priority: 15.04.2004 DE 102004018344
(43) Date of publication of application: 10.01.2007
(73) Proprietor: REINZ-Dichtungs-GmbH, 89233 Neu-Ulm (DE)
(72) Inventor: HÖHE, Kurt, 89129 Langenau (DE)
(74) Representative: Gleiter, Hermann
(86) International application number: PCT/EP2005/004049
(87) International publication number: WO 2005/100829

(56) References cited:
- EP-A- 1 136 733
- EP-A- 1 136 734
- US-A- 3 930 656
- US-A- 4 272 085
- US-A- 5 938 208
- US-A1- 2004 041 352
- US-B1- 6 457 726

## Description

The invention relates to a metallic cylinder head gasket with at least one gasket sheet which has at least one combustion chamber through-opening, with a deformation limiter which surrounds the through-opening and is configured in the gasket sheet in the form of a profiling which is undulating in its transverse direction and extends over at least one period of the waveform, and with a sealing means assigned to the deformation limiter.

In order to increase and safeguard the sealing effect of a metallic flat gasket over a fairly long period of time, it is normal to configure a bead at least around some of the most varied of through-openings by corresponding shaping of at least one of the layers of such a flat gasket, which bead generally completely surrounds these through-openings. A corresponding sealing line is then produced by this bead. Such a bead can however only fulfil the function as long as a certain degree of elasticity is maintained in the bead region, which as a rule cannot be maintained without additional means with which a complete plastic deformation is prevented. For this purpose, normally deformation limiters for the beads are used. Such deformation limiters are known in the most varied of embodiments and are normally designated also as stoppers. In recent times, the development in the field of metallic cylinder head gaskets has concentrated in particular on this deformation limiter. Hence it is known to form deformation limiters by folding over the gasket sheet, by means of a separate ring or also by forging/deformation by compression of the gasket sheet. Furthermore, also so-called "hard coating" coatings have been described as stoppers. A new development with respect to the configuration of a special deformation limiter is described in WO 01/96768 A1. The deformation limiter disclosed there is configured in the form of an undulation.

As portrayed above, the development in recent times has hence related in particular to the deformation limiter, i.e. to the stopper.

Cylinder head gaskets of this type with a stop-per/bead combination as described above require however relatively high compression forces during installation. In particular with new high performance engines, it is necessary to effect a relatively high compression in order then also to achieve a complete seal. This has been effected to date in the state of the art in that a higher screw force is applied in order to achieve as complete a seal as possible.

However, it has now been shown that, in particular with high compression forces, component distortions occur in the metallic cylinder head gaskets of the state of the art.

US 5,938,208 A discloses a cylinder head gasket according to the preamble of claim 1. The gasket as shown in US 5,938,208 A comprises secondary beads integrated into a coating layer, wherein the secondary bead together with its coating acts as deformation limiter for a sealing bead.

Starting herefrom, it is now the object of the present invention to provide an improved cylinder head gasket which, even with high compression forces and a good sealing effect, has no component distortions and absolutely no cracks.

This object is achieved with the metallic cylinder head gasket according to claim 1. The dependent claims reveal advantageous developments.

It is hence proposed according to the invention to replace the sealing means in the form of the bead, which are common to date in the state of the art, by an elastomer coating. Consequently, it now becomes possible that, with lower screw forces due to the elasticity of the elastomer material, at least as good a seal can be achieved, as is otherwise achieved with a conventional metallic bead. If the screw forces are then increased, an improved sealing effect relative to the state of the art can be achieved with lower screw forces.

The elastomer coating is thereby applied on at least one gasket sheet on one or both sides, the elastomer coating extending partially over the undulating profilings of the deformation limiter. This implies that only a part of the undulating profiling is provided with the elastomer coating. Likewise, a coating of the gasket sheet with the elastomer also outwith the undulating profiling is possible, i.e. the elastomer coating overlaps at the edges of the deformation limiter.

It is therefore provided according to the invention that the annular elastomer coating, which is assigned to the deformation limiter, exceeds the constructional height of the deformation limiter in its total thickness so that, when screwing down the cylinder head gasket, the elastomer coating is then compressed to a height that is at least the constructional height of the stopper. Preferably, the cylinder head gasket according to the invention is thereby configured such that the total thickness of the elastomer coating in the non-installed state is greater than the maximum constructional height of the deformation limiter, preferably by up to 100%, particularly preferred by up to 70%.

With respect to the geometry of the undulation, the undulation can have flattened undulation peaks down to a trapezoidal form. The individual undulation peaks of the undulation can thereby have a different height. Between adjacent undulation peaks of one undulation, different spacings can occur. It is hereby preferred that the undulating profiling has higher undulation peaks on the combustion chamber side, i.e. in the direction of the combustion chamber opening, than in the opposite direction.

A further advantageous embodiment provides that the deformation limiter has at least one profiling-free portion in the centre of the deformation limiter between undulating profilings at the edges.

The elastomer coating can thereby be applied on a metallic layer or also on a plurality of metallic layers of the gasket. It is essential in all cases that the total thickness, i.e. the sum of the elastomer coatings, if this is disposed on more than one gasket sheet, is higher than the sum of the constructional heights of the at least one deformation limiter.

A preferred embodiment of the invention thereby provides that the annular elastomer coating and the deformation limiter are disposed in one metallic layer. In this case, the elastomer coating is then applied on both sides of the metallic layer. The elastomer coating thereby has the same thickness on both sides of the metallic gasket sheet.

Furthermore, the cylinder head gasket according to the invention can thereby be constructed such that it is formed from at least two layers, a deformation limiter and an elastomer coating as sealing means being disposed in each layer. The invention also comprises all further embodiments of multilayer metallic cylinder head gaskets. Thus it is preferred furthermore according to the invention if the cylinder head gasket comprises two metallic gasket sheets, the deformation limiter and the elastomer coating as sealing means being disposed in different layers.

The concept according to the invention in the form of an annular elastomer coating as sealing means can also be applied for other openings in the gasket sheet. Yet further openings are normally present in the gasket sheet, in addition to the through-opening for the combustion chamber, thus in particular for fluids, such as oil and water and for screws. As a rule, these additional openings can also be sealed by a sealing means, in particular by a bead. Since different requirements exist in the case of fluids and in particular in the case of screwholes than in the case of the combustion chamber through-opening, it is not necessary in all cases to apply a combi-nation made of stopper and bead also at the further openings. A corresponding seal of a flanged-on chain case is likewise conceivable.

The present invention therefore includes also those embodiments in which the further openings for fluids such as water and oil or even the screwholes are surrounded by the annular elastomer coating according to the invention. Of course, a deformation limiter can hereby additionally be assigned to the sealing means if it is necessary. The deformation limiter can thereby represent a part of the sealing element. Preferably, the further through-openings likewise have sealing means and deformation limiters analogously to those at the combustion chamber which are however different in embodiment and/or in at least one of the parameters of height, width and spacing. As is generally the case, neighbouring through-openings of the same kind (water or oil) may be sealed jointly by a single sealing means - with or without an additional deformation limiter.

The annular elastomer coating of the cylinder head gasket according to the invention is preferably 0.5 to 5 mm wide, particular preferred 1 to 3 mm wide. The total thickness of the elastomer coating is thereby preferred by up to 100%, particularly preferred by up to 70% greater than the constructional height of the deformation limiter.

Preferably materials selected from the group of silicones, fluorosilicones, fluorocarbon polymers, fluorothermoplasts, polyether ether ketones (PEEK), polyphenylene sulphide (PSU), polyamide imide (PAI) and self-reinforced liquid crystalline polymers (LCP) are used as elastomer coating. Basically, also mixtures of these materials and dispersions thereof can be used. The elastomers can likewise be used in foamed form.

The elastomer coating can thereby be applied on the gasket sheet by normal methods, as are known per se from the state of the art. Screen printing, in which the material itself or else dispersions of the material are applied, is hereby particularly suitable. However, also injection moulding is very suitable for application of the elastomer coating.

In tests, the applicant was able to show that, in the case of the cylinder head gasket according to the invention, it is particularly preferred if the annular elastomer coating is applied on a metallic gasket sheet which has anchoring means. It is avoided by means of these anchoring means that too great a deformation of the elastomer material occurs during compression of the gasket during installation. It is thereby particularly preferred if the anchoring means are configured in the form of an undulation. This embodiment in particular has the advantage that when an undulation is likewise introduced as deformation limiter during production of the cylinder head gasket only one operation is required. In the case of this particularly preferred embodiment, the deformation limiter is hence an undulation and the anchoring means for the elastomer coating are likewise undulating. Of course, the undulations which are present in the region of the elastomer coating are designed differently in their dimensioning from the undulations which act as deformation limiters. The undulations must in this case be lower than those undulations which form the deformation limiter. It is advantageous with this embodiment that the undulations ensure clamping of the annular elastomer coating so that as a result an improved hold of the elastomer coating is achieved also in this respect.

The invention is explained in more detail subsequently with reference to Figures 1 to 12, without the subject being restricted to the embodiments shown here.
- Figs. 1a -: c show a cylinder head gasket in which the deformation limiter and the sealing means in the form of the elastomer coating is located in a layer.
- Figs. 2a and b: show in section the construction of a single layer metallic cylinder head gasket.
- Fig. 3: shows in plan view an embodiment according to the invention of the metallic cylinder head gasket.
- Figs. 4 to 5: show individual embodiments according to the invention of the metallic cylinder head gasket.
- Fig. 6: shows the construction of a further cylinder head gasket.
- Figs. 7 to 12: show individual embodiments according to the invention of the metallic cylinder head gasket.

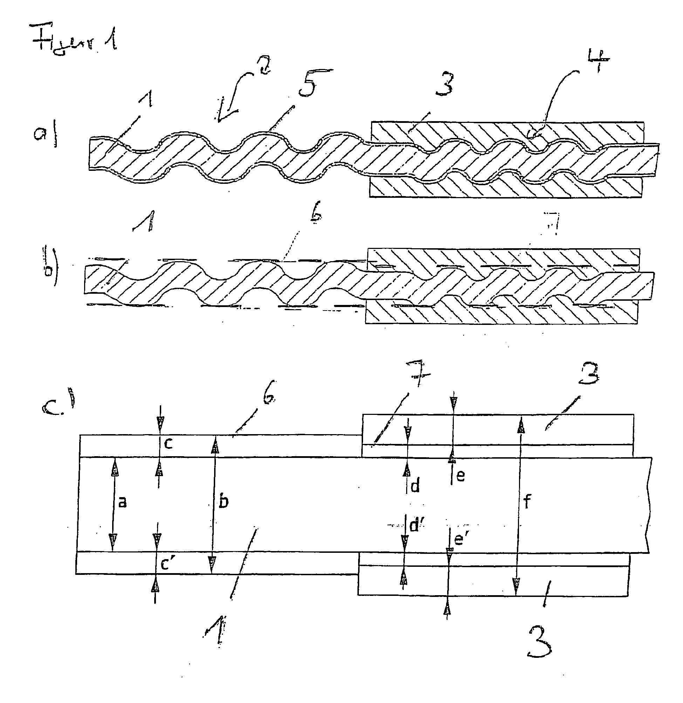

Fig. 1 a to c shows a metallic cylinder head gasket in which the deformation limiter and the sealing means are disposed in one layer. This cylinder head gasket is not an embodiment of the invention, but helpful to understand certain aspects of the invention. In the gasket according to Fig. 1a, the deformation limiter is configured as an undulation 2 which is formed in the gasket sheet 1. The elastomer coating 3 as sealing means is assigned to this deformation limiter in the form of the undulation. The elastomer coating comprises in the example a fluorocarbon polymer. The metallic gasket sheet 1 is a spring steel in which the undulation 2 has been formed by stamping. Fig. 1a shows furthermore that the gasket shown there has in addition an undulation 4 as anchoring means for the elastomer coating 3. In the gasket according to Fig. 1a, also an additional elastomer coating 5 is provided in contrast to the gasket according to Fig. 1b. Coatings of this type have been common to date already in the state of the art and are applied as a rule over the whole surface on the metallic layers of the cylinder head gaskets. Coatings of this type, which are formed generally from fluoropolymers, serve for microsealing of surface irregularities. As Fig. 1b shows, it is however also possible to dispense with an additional coating of this type. The thickness of the coating of the fluoropolymer 5 is thereby normally in the range of 40 to 120 µm.

Fig. 1b shows an identical gasket to Fig. 1a, only without additional coating by means of fluoropolymer 5.

In Fig. 1b, the imaginary lines 6 and 7 are also drawn in order to improve explanation of the dimensioning of the cylinder head gasket.

In Fig. 1c, the dimensions of the cylinder head gasket, given by way of example, are shown according to Figs. 1a and 1b. The thickness of the metallic gasket sheet is designated with a in Fig. 1c. The constructional height of the deformation limiter, as in the present case the undulation, is designated with c or c'. In the example according to Fig. 1a and 1b, the gasket sheet has a thickness of 0.25 mm and the amplitude of the undulation, designated as c in Fig. 1c, has a constructional height of 0.12 mm. The total thickness of the deformation limiter (designated with b) is accordingly 0.37 mm. As Fig. 1c shows, the amplitude of the undulation in the region of the elastomer coating 3 is smaller than in the deformation limiter region. The constructional height of the undulation, which serves as anchoring means, is in the example according to Fig. 1c d = 0.07 mm. The elastomer coating 3 in Fig. 1c has a thickness of e = 0.08 mm on both sides so that a total thickness f of 0.48 mm results.

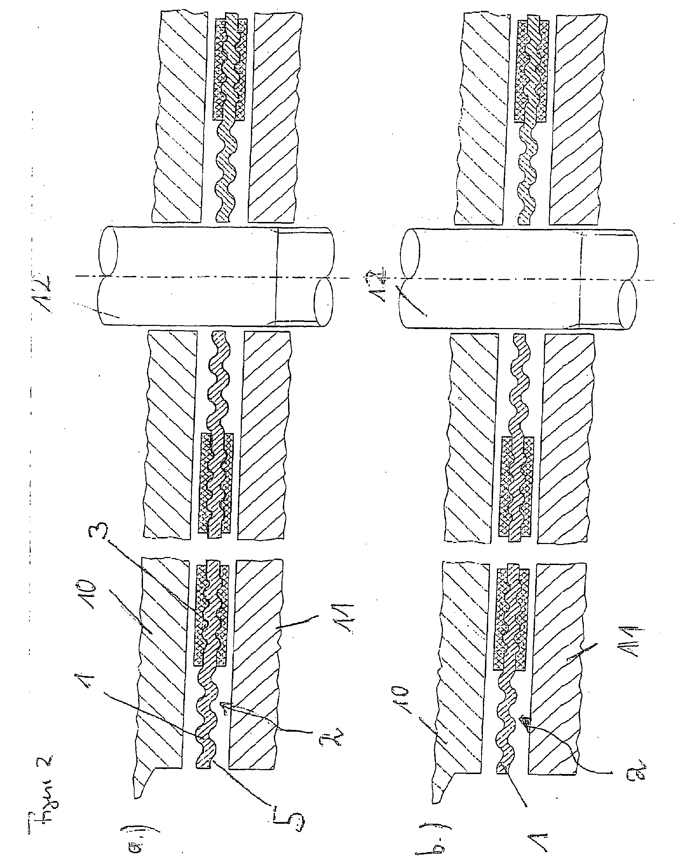

Fig. 2a and 2b now show in section the construction of a single layer metallic cylinder head gasket being present in turn in Fig. 2a. This cylinder head gasket is not an embodiment of the invention, but helpful to understand certain aspects of the invention. Fig. 2a shows the gasket in which the metallic gasket sheet 1 has also an additional fluoropolymer coating 5. In Fig. 2a, the cylinder head is designated with 10 and the cylinder block with 11. Fig. 2 shows furthermore schematically an additional opening in which a screw 12 is introduced. It is now easily detectable from Fig. 2a that, if the cylinder head is compressed with the cylinder block, the elastomer coating 3 is compressed at most to the constructional height of the stopper 2. As a result of the fact that the elastomer coating is softer in its elastic behaviour than the metallic beads which were previously common in the state of the art, substantially smaller screw forces are required to achieve a similar sealing effect. On the other hand, it is also possible, in the case of high performance engines in which as high a sealing effect as possible is required due to high pressures, to make possible a yet improved sealing effect relative to the state of the art by means of increased screw forces.

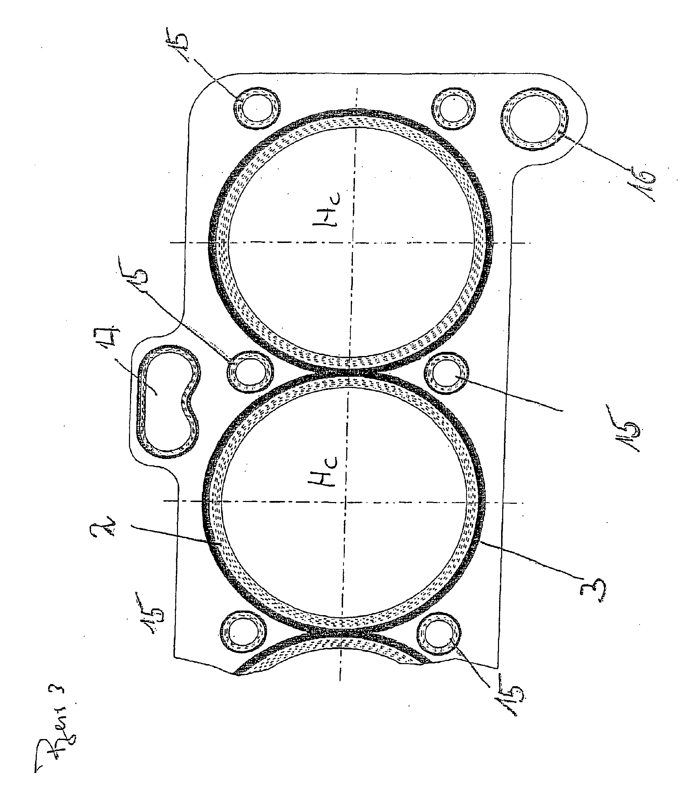

Fig. 3 now shows-in plan view a cylinder head gasket according to the invention. In Fig. 3, the annular elastomer coating 3 is detectable. The annular elastomer coating 3 shown there is assigned to a deformation limiter 2 which is symbolised in Fig. 3 by broken lines and is configured as an undulation. Furthermore, in the embodiment according to Fig. 3, the additional fluid openings 15 and 16 and also the opening 17 are surrounded with the combination according to the invention of the sealing means made of the elastomer coating and an undulating deformation limiter.

The further Figures show different embodiment variants of the flat gasket, the arrangement being represented in relationship to the combustion chamber opening (Hc).

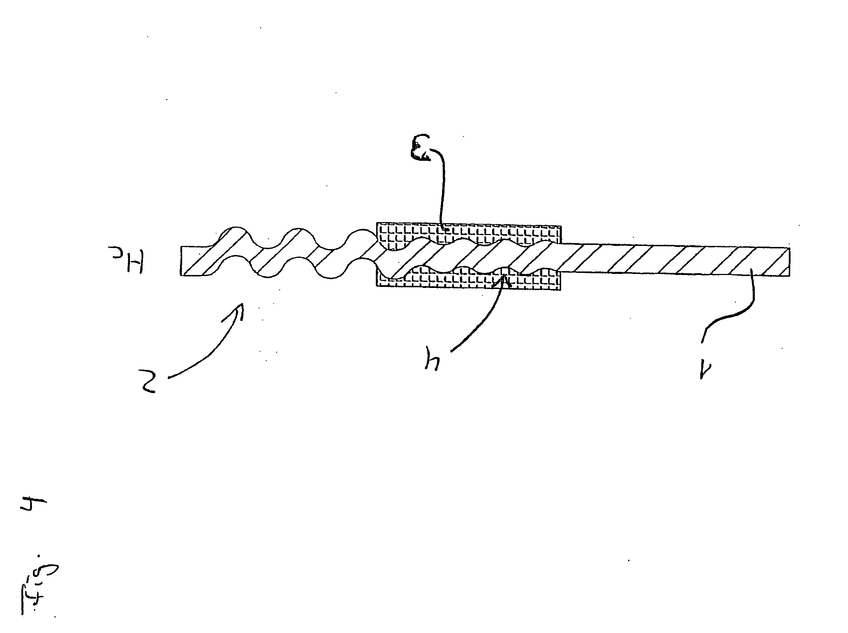

Figure 4 shows an embodiment of the metallic cylinder head gasket according to the invention, in which the deformation limiter is configured as an undulation 2 which is formed into the gasket sheet 1. An elastomer coating 3 as sealing means is assigned on the side orientated away from the combustion chamber. In the region of the elastomer coating 3, the gasket sheet 1 likewise has an undulation 4, said undulation serving as anchoring means for the elastomer coating 3. The undulation 4 has thereby a smaller amplitude relative to the undulation 2.

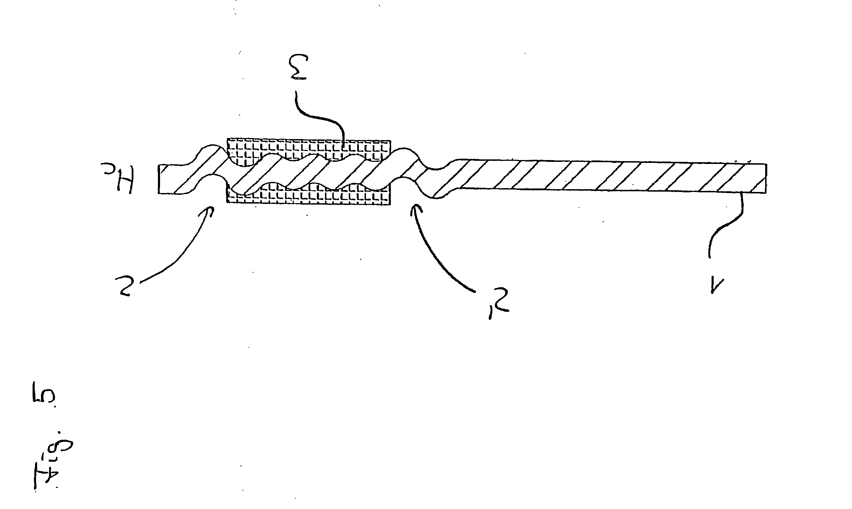

In Figure 5, an embodiment which is comparable to Figure 4 is represented. The region of the undulation 2 with greater amplitude thereby extends towards both regions outwith the elastomer coating 3, i.e. towards the side orientated towards the combustion chamber opening and also towards the side of the elastomer coating orientated away from the combustion chamber opening.

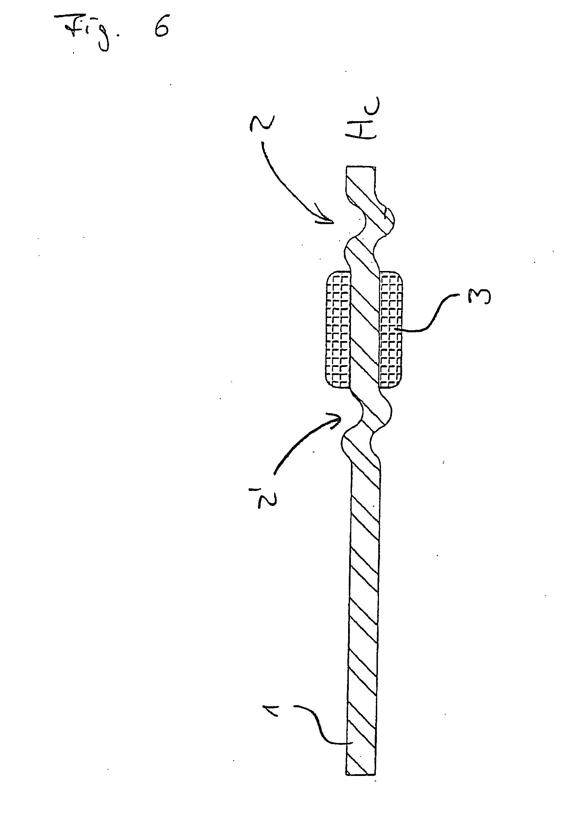

In Figure 6, a gasket is shown in which the gasket sheet 1 has two regions 2 and 2' configured as an undulation, said regions including a non-profiled region which is provided with an elastomer coating 3. This cylinder head gasket is not an embodiment of the invention, but helpful to understand certain aspects of the invention.

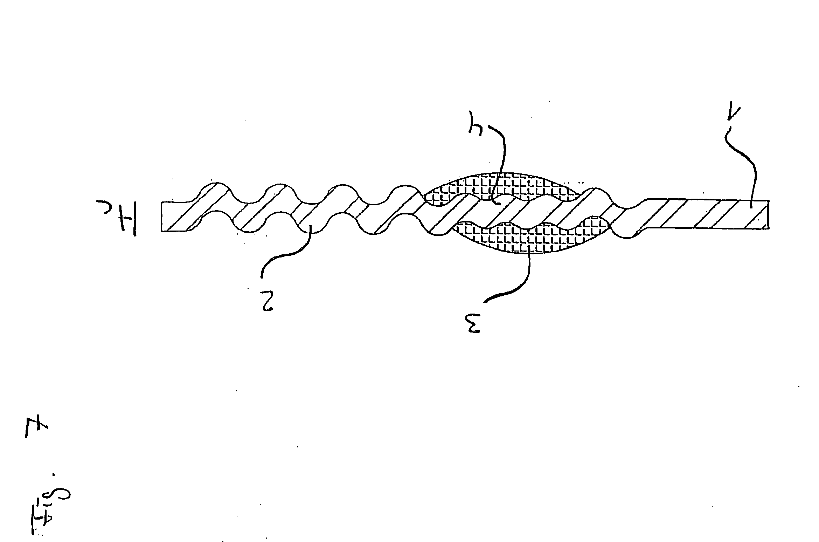

In Figure 7, an embodiment is represented in which the gasket sheet 1 includes a deformation limiter in the form of an undulation 2. The assigned elastomer coating 3 at the respective edges thereof has a smaller height than in the centre. Also in this embodiment, an undulation 4 as anchoring means is disposed in the region of the elastomer coating. The elastomer coating 3 is flanked respectively by higher undulating regions.

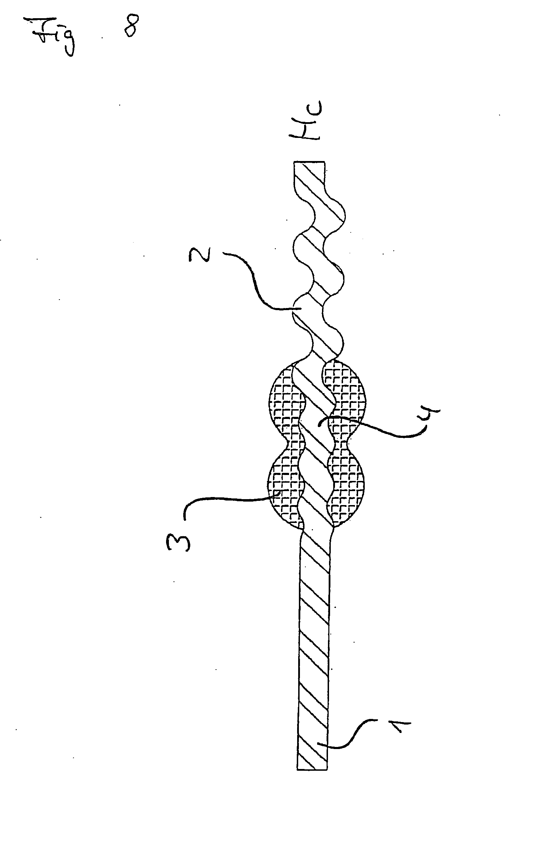

In Figure 8, an embodiment comparable to Figure 7 is represented. The difference herein is based on the fact that the profile of the elastomer coating 3 has a spectacle-like configuration, i.e. has a smaller height in the centre and at the edges than in the remaining regions.

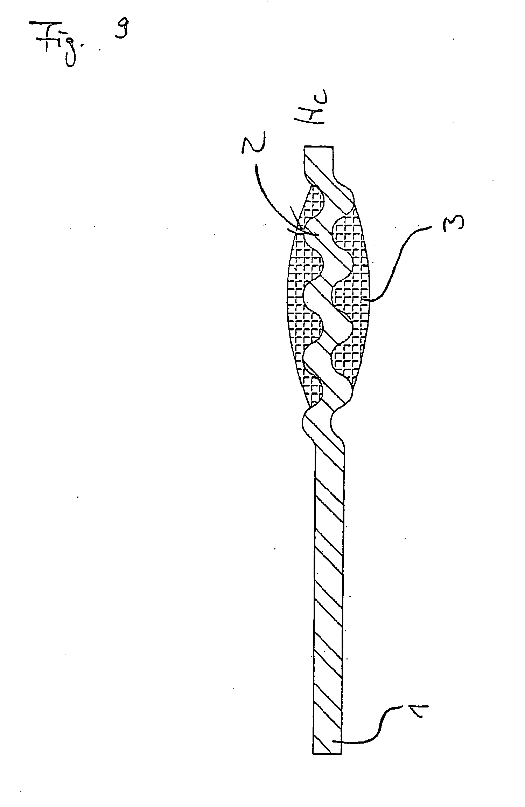

In Figure 9, an embodiment is represented in which the undulation 2 is part of the gasket sheet 1 is provided with an elastomer coating 3 as sealing means, here also the height of the elastomer coating 3 being smaller at the edges than in the centre. The undulation here has a constant constructional height over the entire region.

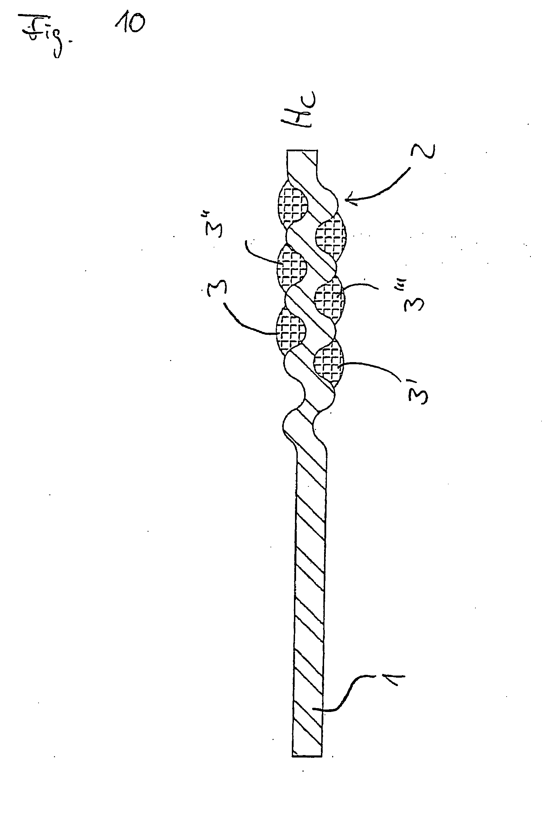

In Figure 10, the gasket sheet 1 has a deformation limiter in the form of an undulation 2. In the undulation valleys of the undulation 2, elastomer coatings 3, 3', 3" and 3"' are thereby introduced which fill the latter completely.

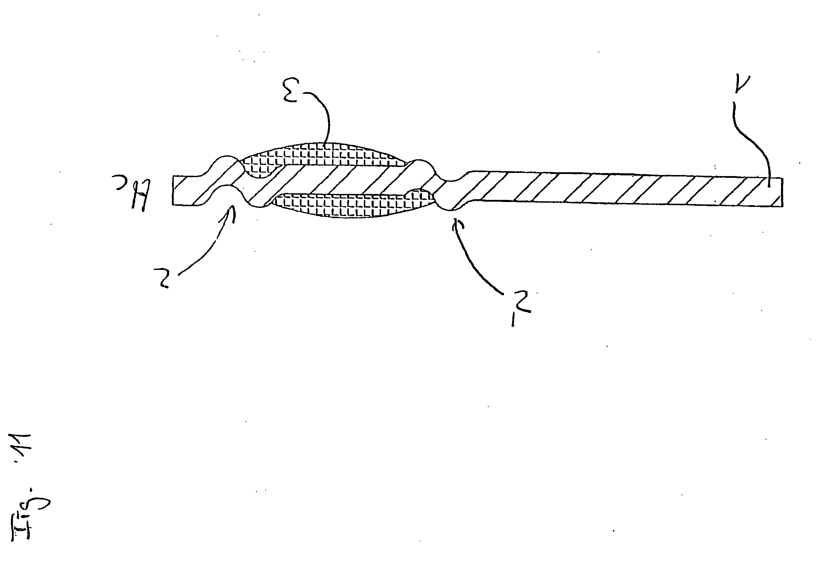

In Figure 11, an embodiment is illustrated in which regions of the gasket sheet 1 are configured as an undulation 2, 2'. A profiling-free portion is disposed between these two regions and is provided with the elastomer coating 3.

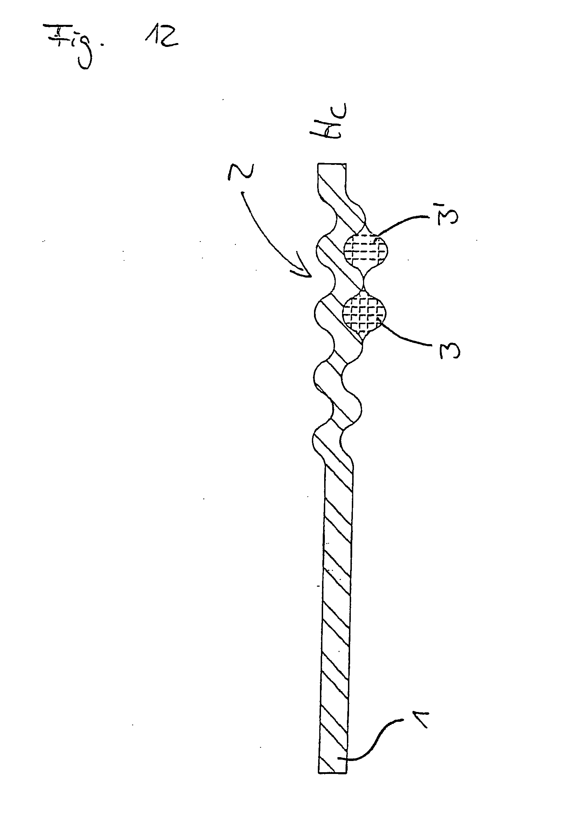

In Figure 12, an embodiment is represented in which the gasket sheet 1 is provided with a deformation limiter in the form of an undulation 2. In the undulation valleys of the undulation 2, elastomer coatings 3 and 3' are introduced in excess such that the latter in turn form an undulating surface. The elastomer coatings 3 and 3' have therefore to some extent the shape of a ring.

## Claims

1. Metallic cylinder head gasket with at least one gasket sheet (1) which has at least one combustion chamber through-opening (Hc), with a deformation limiter (2) which surrounds the through-opening (Hc) and which is configured in the gasket sheet in the form of a profiling (2) which is undulating in its transverse direction and extends over at least one period of the waveform, and with a sealing means (3) assigned to the deformation limiter (2),
**characterised in that**
the sealing means is an elastomer coating (3) which is applied on the at least one gasket sheet on one or both sides, the elastomer coating (3) extending partially over the undulating profilings (2) of the deformation limiter and the elastomer coating (3) on the gasket sheet (1) has a total thickness in the non-installed state which is greater than the maximum constructional height of the deformation limiter (2).

2. Metallic cylinder head gasket according to claim 1,
**characterised in that** the undulation (2) has flattened undulation peaks up to a trapezoidal form.

3. Metallic cylinder head gasket according to claim 1 or 2,
**characterised in that** the undulation (2) has different heights of its undulation peaks.

4. Metallic cylinder head gasket according to one of the claims 1 to 3,
**characterised in that** different spacings exist between adjacent undulation peaks of one undulation (2).

5. Metallic cylinder head gasket according to at least one of the claims 1 to 4,
**characterised in that** the deformation limiter (2) has at least one profiling-free portion between undulating profilings at the edges.

6. Metallic cylinder head gasket according to at least one of the claims 1 to 5,
**characterised in that** the undulating profiling (2) has higher undulation peaks on the combustion chamber side.

7. Metallic cylinder head gasket according to at least one of the claims 1 to 6,
**characterised in that** the elastomer coating (3) is disposed in at least two undulation valleys on one or both sides.

8. Metallic cylinder head gasket according to at least one of the claims 1 to 7,
**characterised in that** the elastomer coating (3) is disposed in individual undulation valleys on one or both sides.

9. Metallic cylinder head gasket according to at least one of the claims 1 to 8,
**characterised in that** the undulating profiling (2) is guided out beyond the elastomer coating (3) on the combustion chamber side.

10. Metallic cylinder head gasket according to claim 9,
**characterised in that** the undulation peaks on the combustion chamber side have a greater height than the undulation peaks covered by the elastomer coating (3).

11. Metallic cylinder head gasket according to at least one of the claims 1 to 10,
**characterised in that** the undulating profiling (2) is guided out beyond the elastomer coating (3) on both sides.

12. Metallic cylinder head gasket according to at least one of the claims 1 to 11,
**characterised in that** the total thickness of the elastomer coating (3) is greater than the constructional height of the deformation limiter (2) by up to 100%.

13. Metallic cylinder head gasket according to claim 12,
**characterised in that** the elastomer coating (3) is greater than the constructional height of the deformation limiter (2) by up to 70%.

14. Metallic cylinder head gasket according to at least one of the claims 1 to 13,
**characterised in that** the elastomer coating (3) is selected from the group of silicones, fluorosilicones, fluorocarbon polymers, fluorothermoplasts, polyether ether ketones (PEEK), polyphenylene sulphide (PSU), polyamide imide (PAI) and self-reinforced liquid crystalline polymers (LCP).

15. Metallic cylinder head gasket according to claim 14,
**characterised in that** the elastomer is foamed.

16. Metallic cylinder head gasket according to at least one of the claims 1 to 15,
**characterised in that** the flat gasket has further through-openings (15, 16, 17), in particular for screws and fluids, on which likewise sealing means are disposed at least partially.

17. Metallic cylinder head gasket according to claim 16,
**characterised in that** likewise sealing means with assigned deformation limiters are disposed at least partially at the further through-openings.

18. Metallic cylinder head gasket according to claim 17,
**characterised in that** likewise sealing means and deformation limiters analogously to those at the combustion chamber (Hc) are disposed at least partially at the further through-openings (15, 16, 17), said sealing means and deformation limiters being different in embodiment and/or in at least one of the parameters of height, width and spacing.

## Patentansprüche

1. Metallische Zylinderkopfdichtung, mit zumindest einem mindestens eine Brennraumdurchgangsöffnung (Hc) aufweisenden Dichtungsblech (1), mit einem die Durchgangsöffnung (Hc) umgebenden Verformungsbegrenzer (2), der in Form einer in ihrer Querrichtung wellenförmigen Profilierung (2), die sich über mindestens eine Periode der Wellenform erstreckt, im Dichtungsblech ausgebildet ist und einem dem Verformungsbegrenzer (2) zugeordneten Dichtmittel (3),
**dadurch gekennzeichnet,**
**dass** das Dichtmittel eine Elastomerbeschichtung (3) ist, die auf dem mindestens einen Dichtungsblech ein- oder beidseitig aufgebracht ist, wobei sich die Elastomerbeschichtung (3) teilweise über die wellenförmigen Profilierungen (2) des Verformungsbegrenzers erstreckt und die Elastomerbeschichtung (3) auf dem Dichtungsblech (1) eine gesamte Dicke im nichteingebauten Zustand aufweist, die größer als die maximale Bauhöhe des Verformungsbegrenzers (2) ist.

2. Metallische Zylinderkopfdichtung nach Anspruch 1,
**dadurch gekennzeichnet, dass** die Wellenform (2) abgeflachte Wellenberge bis hin zu einer Trapezform aufweist.

3. Metallische Zylinderkopfdichtung nach Anspruch 1 oder 2,
**dadurch gekennzeichnet, dass** die Wellenform unterschiedliche Höhen ihrer Wellenberge aufweist.

4. Metallische Zylinderkopfdichtung nach einem der Ansprüche 1 bis 3,
**dadurch gekennzeichnet, dass** zwischen benachbarten Wellenbergen einer Wellenform (2) unterschiedliche Abstände bestehen.

5. Metallische Zylinderkopfdichtung nach mindestens einem der Ansprüche 1 bis 4,
**dadurch gekennzeichnet, dass** der Verformungsbegrenzer (2) zwischen wellenförmigen Profilierungen an den Rändern mindestens einen profilierungsfreien Abschnitt aufweist.

6. Metallische Zylinderkopfdichtung nach mindestens einem der Ansprüche 1 bis 5,
**dadurch gekennzeichnet, dass** die wellenförmige Profilierung (2) brennraumseitig höhere Wellenberge aufweist.

7. Metallische Zylinderkopfdichtung nach mindestens einem der Ansprüche 1 bis 6,
**dadurch gekennzeichnet, dass** die Elastomerbeschichtung (3) in mindestens zwei Wellentälern ein- oder beidseitig angeordnet ist.

8. Metallische Zylinderkopfdichtung nach mindestens einem der Ansprüche 1 bis 7,
**dadurch gekennzeichnet, dass** die Elastomerbeschichtung (3) in einzelnen Wellentälern ein- oder beidseitig angeordnet ist.

9. Metallische Zylinderkopfdichtung nach mindestens einem der Ansprüche 1 bis 8,
**dadurch gekennzeichnet, dass** die wellenförmige Profilierung (2) brennraumseitig über die Elastomerbeschichtung (3) hinausgeführt ist.

10. Metallische Zylinderkopfdichtung nach Anspruch 9,
**dadurch gekennzeichnet, dass** die brennraumseitigen Wellenberge eine größerer Höhe aufweisen als die von der Elastomerbeschichtung (3) abgedeckten Wellenberge.

11. Metallische Zylinderkopfdichtung nach mindestens einem der Ansprüche 1 bis 10,
**dadurch gekennzeichnet, dass** die wellenförmige Profilierung (2) beidseitig über die Elastomerbeschichtung (3) hinausgeführt ist.

12. Metallische Zylinderkopfdichtung nach mindestens einem der Ansprüche 1 bis 11,
**dadurch gekennzeichnet, dass** die gesamte Dicke der Elastomerbeschichtung (3) um bis zu 100 % größer ist als die Bauhöhe des Verformungsbegrenzers (2).

13. Metallische Zylinderkopfdichtung nach Anspruch 12,
**dadurch gekennzeichnet, dass** die Elastomerbeschichtung (3) um bis zu 70 % größer ist als die Bauhöhe des Verformungsbegrenzers (2).

14. Metallische Zylinderkopfdichtung nach mindestens einem der Ansprüche 1 bis 13,
**dadurch gekennzeichnet, dass** die Elastomerbeschichtung (3) ausgewählt ist aus der Gruppe der Silikone, Fluorsilikone, Fluorcarbon-Polymere, Fluorthermoplaste, Polyetherketone (PEEK), Polyphenylensulfid (PSU), Polyamidimid (PAI) und eigenverstärkte, flüssigkristalline Polymere (LCP).

15. Metallische Zylinderkopfdichtung nach Anspruch 14,
**dadurch gekennzeichnet, dass** das Elastomer geschäumt ist.

16. Metallische Zylinderkopfdichtung nach mindestens einem der Ansprüche 1 bis 15,
**dadurch gekennzeichnet, dass** die Flachdichtung weitere Durchgangsöffnungen (15, 16, 17), insbesondere für Schrauben und Fluide, aufweist, auf denen zumindest teilweise ebenfalls Dichtmittel angeordnet sind.

17. Metallische Zylinderkopfdichtung nach Anspruch 16,
**dadurch gekennzeichnet, dass** an den weiteren Durchgangsöffnungen zusätzlich zumindest teilweise ebenfalls Dichtmittel mit zugeordneten Verformungsbegrenzern angeordnet sind.

18. Metallische Zylinderkopfdichtung nach Anspruch 17,
**dadurch gekennzeichnet, dass** an den weiteren Durchgangsöffnungen (15, 16, 17) zumindest teilweise ebenfalls Dichtmittel und Verformungsbegrenzer analog zu denen am Brennraum (Hc) angeordnet sind, die in Ausführung und/oder mindestens einem der Parameter Höhe, Breite und Abstand unterschiedlich sind.

## Revendications

1. Joint de culasse métallique avec au moins une feuille de joint (1) qui possède au moins une ouverture traversante de chambre de combustion (Hc), avec un limiteur de déformation (2) qui entoure l'ouverture traversante (Hc) et qui est configuré dans la feuille de joint sous la forme d'un profil (2) qui ondule dans sa direction transversale et s'étend sur au moins une période de la forme d'onde, et avec des moyens d'étanchéité (3) associés au limiteur de déformation (2),
**caractérisé en ce que**
les moyens d'étanchéité sont un revêtement élastomère (3) qui est appliqué sur la au moins une feuille de joint sur un ou les deux côtés, le revêtement élastomère (3) s'étendant partiellement au-dessus des profils ondulants (2) du limiteur de déformation et le revêtement élastomère (3) sur la feuille de joint (1) a une épaisseur totale dans l'état non installé qui est supérieure à la hauteur de construction maximale du limiteur de déformation (2).

2. Joint de culasse métallique selon la revendication 1,
**caractérisé en ce que** l'ondulation (2) présente des crêtes d'ondulation aplaties jusqu'à avoir une forme trapézoïdale.

3. Joint de culasse métallique selon la revendication 1 ou 2,
**caractérisé en ce que** l'ondulation (2) présente des crêtes d'ondulation de hauteurs différentes.

4. Joint de culasse métallique selon l'une des revendications 1 à 3,
**caractérisé en ce qu'**il existe des espacements différents entre les crêtes d'ondulation adjacentes d'une ondulation (2).

5. Joint de culasse métallique selon l'au moins une des revendications 1 à 4,
**caractérisé en ce que** le limiteur de déformation (2) a au moins une partie sans profil entre les profils ondulants au niveau des bords.

6. Joint de culasse métallique selon au moins une des revendications 1 à 5,
**caractérisé en ce que** le profil ondulant (2) présente des crêtes d'ondulation plus élevées sur le côté de la chambre de combustion.

7. Joint de culasse métallique selon l'au moins une des revendications 1 à 6,
**caractérisé en ce que** le revêtement élastomère (3) est disposé dans au moins deux creux d'ondulation sur un ou les deux côtés.

8. Joint de culasse métallique selon au moins une des revendications 1 à 7,
**caractérisé en ce que** le revêtement élastomère (3) est disposé dans des creux d'ondulation individuels sur un ou les deux côtés.

9. Joint de culasse métallique selon au moins une des revendications 1 à 8,
**caractérisé en ce que** le profil ondulant (2) est guidé au-delà du revêtement élastomère (3) sur le côté de la chambre de combustion.

10. Joint de culasse métallique selon la revendication 9,
**caractérisé en ce que** les crêtes d'ondulation sur le côté de la chambre de combustion ont une hauteur supérieure aux crêtes d'ondulation couvertes par le revêtement élastomère (3).

11. Joint de culasse métallique selon au moins une des revendications 1 à 10,
**caractérisé en ce que** le profil ondulant (2) est guidé au-delà du revêtement élastomère (3) sur les deux côtés.

12. Joint de culasse métallique selon au moins une des revendications 1 à 11,
**caractérisé en ce que** l'épaisseur totale du revêtement élastomère (3) dépasse la hauteur de construction du limiteur de déformation (2) d'une valeur pouvant aller jusqu'à 100 %.

13. Joint de culasse métallique selon la revendication 12,
**caractérisé en ce que** le revêtement élastomère (3) dépasse la hauteur de construction du limiteur de déformation (2) d'une valeur pouvant atteindre 70 %.

14. Joint de culasse métallique selon au moins une des revendications 1 à 13,
**caractérisé en ce que** le revêtement élastomère (3) est choisi dans le groupe des silicones, fluorosilicones, polymères de fluorocarbone, fluorothermoplastiques, polyéther éther cétones (PEEK), sulfure de polyphénylène (PSU), polyamide imide (PAI) et polymères cristallins liquides autorenforcés (LCP).

15. Joint de culasse métallique selon la revendication 14,
**caractérisé en ce que** l'élastomère est moussé.

16. Joint de culasse métallique selon au moins une des revendications 1 à 15,
**caractérisé en ce que** 1e joint plat possède d'autres ouvertures traversantes (15, 16, 17), en particulier pour les vis et les fluides, sur lesquelles sont disposés au moins partiellement des éléments d'étanchéité similaires.

17. Joint de culasse métallique selon la revendication 16,
**caractérisé en ce que** des moyens d'étanchéité similaires avec des limiteurs de déformation associés sont disposés au moins partiellement au niveau des autres ouvertures traversantes.

18. Joint de culasse métallique selon la revendication 17,
**caractérisé en ce que** des moyens d'étanchéité similaires et des limiteurs de déformation analogues à ceux au niveau de la chambre de combustion (Hc) sont disposés au moins partiellement au niveau des autres ouvertures traversantes (15, 16, 17), lesdits moyens d'étanchéité et limiteurs de déformation étant différents quant à leur mode de réalisation et/ou au moins un des paramètres de hauteur, largeur et espacement.
